# EUROPEAN PATENT SPECIFICATION

(11) **EP 2 585 321 B1**
(45) Date of publication and mention of the grant of the patent: **19.12.2018**
(21) Application number: 11801235.0
(22) Date of filing: 17.06.2011
(51) Int. Cl.: B60G 17/0165, B62D 61/12, B60K 28/16

(54) **DEVICE AND METHOD FOR LOAD TRANSFER IN A BOGIE**
VORRICHTUNG UND VERFAHREN ZUM LASTÜBERTRAGUNG IN EINEM FAHRGESTELL
DISPOSITIF ET PROCÉDÉ DE TRANSFERT DE CHARGE DANS BOGIE

(30) Priority: 28.06.2010 SE 1050703
(43) Date of publication of application: 01.05.2013
(73) Proprietor: Scania CV AB, 151 87 Södertälje (SE)
(72) Inventor: HESSE, Johan, SE-611 56 Nyköping (SE)
(74) Representative: Scania CV AB
(86) International application number: PCT/SE2011/050768
(87) International publication number: WO 2012/002878

(56) References cited:
- EP-A1- 1 745 953
- EP-A2- 0 412 791
- EP-A2- 1 995 091
- EP-A2- 1 995 091
- WO-A1-00/00360
- WO-A1-2004/028846
- WO-A1-2007/050014
- GB-A- 1 358 919
- GB-A- 2 387 359
- JP-A- H10 324 135
- US-A- 3 494 632
- US-A- 4 993 729
- US-A1- 2002 074 746
- US-A1- 2007 114 756
- US-A1- 2008 243 334

## Description

### Field of the invention

The present invention relates to a device and a method for regulating load transfer between a number of wheel axles in a bogie, according to the introduction to the independent claims.

### Background to the invention

A bogie is a device situated under a vehicle and used to spread the vehicle's weight over a number of axles and thereby reduce the axle pressure, increase the load capacity and improve the vehicle's cornering. A truck or bus may have at least one bogie with two or more axles with pairs of wheels. One or more of the axles in a bogie may bedriven axle driven axles, or the bogie may comprise tag axles only.

To increase the vehicle's operability and steerability, e.g. when reversing or cornering, load transfers may be effected between the bogie's axles. The general procedure adopted for load transfers is that the driven axle pressure is increased and the tag axle pressure is reduced, i.e. the load distribution among the bogie's axles is altered.

Legal requirements about when and how load transfers should take place are stated inter alia in EC97/27, which sets out requirements for different driven axle pressure limits for different markets. The driven axle pressure according to EC97/27 is usually allowed to be overloaded by up to 30% of the maximum permissible pressure. The upper speed limit for load transfers is 30 km/h if the legal requirements of the country concerned conform to EC97/27.

There are various types of load transfer. In manual load transfers, the driven axle pressure is usually overloaded permanently by up to 30% of the maximum permissible pressure, e.g. by the driver activating a switch. Another example of load transfer is so-called "optimal traction", which is usually active continually if the function is preselected. It does not overload the driven axle, as a control unit ensures that the driven axle pressure is below the legally required limit.

In manual load transfers, the load ratio is usually 60:40 between driven axle and tag axle. In "optimal traction" this ratio may be altered to maximum permissible pressure. If for example the maximum pressure is close to 10 tonnes for the driven axle, the pressure is set to 9.999 tonnes.

An example of load transfer is described in US 4,284,156, in which load transfers in a bogie are effected automatically, depending on the vehicle's load, by raising or lowering of one of the bogie's axles.

A further example of load transfer is described in WO 2004/028846, wherein the load transfer system increases the pressure on the driving axle once the power control system indicates that both of the powered wheels are slipping. WO2004/028846 describes the preamble of claims 1 and 12.

US3494632 discloses a vehicle with means for controlling the load acting on a driving axle and a tag axle of a bogie, so that the load carried by the tag axle does not exceed the highest permissible value.

A practice known from US 5,052,713 is automatic regulation of pneumatic pressure in the suspension system according to the vehicle's speed. This avoids the driver's forgetting to reverse the load distribution when the vehicle reverts to higher speeds. On markets where EC97/27 applies, however, it is only permissible to resort to overloading the driven axle pressure at speeds of up to a maximum of 30 km/h, which means that the vehicle necessarily loses speed when travelling uphill if such load transfers are resorted to. This may also limit the vehicle's steerability downhill, depending on how it is configured, since most drivers will then be unwilling to travel at only 30 km/h.

On markets where EC97/27 does not apply, there might therefore be no upper speed limit for load transfer. The driver is subject to substantial requirements in handling load transfers with up to 30% or more overload on the driven axle, since the dynamics of the moving vehicle are altered. There may be a potential hazard if it takes place at high speeds. The "optimal traction" function increases wear on the tyres of the driven axle, since it is active continually.

The object of the invention is to propose an improved system for load transfer which increases the vehicle's operability and reduces its wear.

### Summary of the invention

The object described above is achieved by a device for regulating load transfer between wheel axles in a vehicle's bogie comprising two or more axles with pairs of wheels in which at least one wheel axle is powered. The vehicle further comprises a control unit adapted to regulating the load distribution between said wheel axles. The device comprises at least one sensor unit adapted to, progressively as the vehicle travels along the road, measuring a road parameter which indicates a characteristic of the road, and to generating a road parameter signal based thereon, and a processor unit adapted to comparing said road parameter with a predetermined threshold value K_{α}, Kᵣ, K_{T} within the category of the road parameter, and to generating a load distribution signal adapted to regulate the load distribution between the wheel axles in the bogie based on the result of that comparison. The device is further adapted to sending the load distribution signal to said control unit, which thereupon regulates the load distribution between the wheel axles in the bogie on the basis of the load distribution signal.

According to another aspect, the object is achieved by a method for regulating the load distribution between wheel axles in a vehicle's bogie comprising two or more axles with pairs of wheels, in which at least one wheel axle is powered, which vehicle comprises a control unit for regulating the load distribution between said wheel axles. The method comprises:
- measuring a road parameter, progressively as the vehicle travels along the road, which indicates a characteristic of the road, and generating a road parameter signal on the basis thereof;
- comparing the road parameter with a predetermined threshold value within the category of the road parameter;
- generating a load distribution signal which indicates the result of that comparison; and
- sending the load distribution signal to said control unit which thereupon regulates the load distribution between the wheel axles of the bogie on the basis of the load distribution signal.

Said device and method make it possible to regulate load distribution when really necessary. According to an embodiment, if load distribution is considered necessary, e.g. to enable the vehicle to travel uphill or downhill, a load distribution signal is generated for the driven axle pressure to be increased on one of the bogie's wheel axles. This increases the vehicle's operability primarily at high speeds and specifically in slippery or treacherous road conditions, including winter conditions. When the road has levelled out, the load distribution between the bogie's axles may subsequently be returned to an initial state. The axle pressure is kept, according to an embodiment, within the limits for maximum driven axle pressure, which means that the driven axle pressure can be increased even when the vehicle is maintaining high speed. The vehicle's ability to travel both uphill and downhill at higher speeds is thereby enhanced. As the function is only activated when really necessary, instead of being constantly active, wear on the vehicle's tyres is thus minimised.

The advantages of the invention increase if the vehicle is unladen or the pressure on the driven axle is below the maximum limit.

Axle pressure means the amount of pressure which an axle of the vehicle exerts on the carriageway. There are regulations, e.g. EC 97/27, which indicate how high the driven axle pressure and the tag axle pressure are allowed to be. Preferred embodiments are described in the dependent claims and the detailed description.

### Brief description of the drawings

The invention is described below with reference to the attached drawings, in which:
Figure 1 illustrates schematically a device according to an embodiment of the invention.
Figure 2 illustrates schematically a vehicle with a bogie as seen from below.
Figure 3 illustrates schematically the load distribution when travelling uphill according to an embodiment of the invention.
Figure 4 illustrates schematically the load distribution when travelling downhill according to an embodiment of the invention.
Figure 5 is a flowchart for the method according to an embodiment of the invention.

### Detailed description of preferred embodiments of the invention

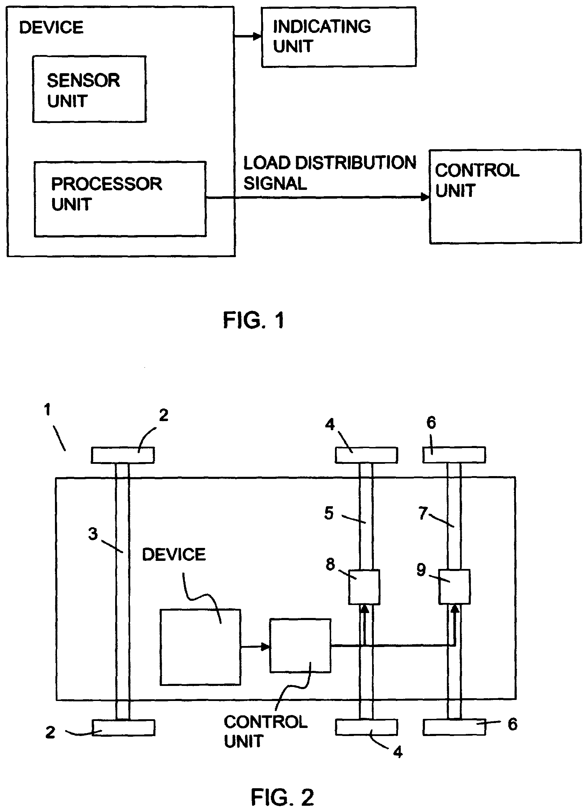

Figure 1 depicts schematically a device according to the invention for regulating the load distribution between wheel axles 5, 7 in a bogie of a vehicle. The device comprises at least one sensor unit adapted to measuring a road parameter which indicates a characteristic of the road, and to generating a road parameter signal on the basis thereof. If several different kinds of road parameters are to be measured, the device is preferably provided with respective sensor units adapted to measuring them. The device comprises also a processor unit adapted to comparing said road parameter with a predetermined threshold value K_{α}, Kᵣ, K_{T} within the category of the road parameter, and to generating a load distribution signal based on the result of that comparison. The device is further adapted to sending that signal to a control unit in the vehicle which is adapted to regulating the load distribution between said wheel axles, whereupon the control unit regulates the load distribution between the wheel axles 5, 7 on the basis of that signal.

According to an embodiment, the control unit comprises one or more preset limit values for the load distribution signal. Various modes for the load distribution between the wheel axles may then be activated depending on how the load distribution signal relates to the limit value or values. One mode comprises for example setting a certain pressure on the driven axle.

Figure 1 depicts the device as a separate unit from the control unit. According to another embodiment, the device is integrated in the control unit, and the load distribution signal is an internal signal in the control unit. The device comprises according to another embodiment an indicating unit situated in and visible on the vehicle's instrument panel. The indicating unit indicates when load transfers are activated, e.g. by a text message, by a computer window which opens or by an acoustic or lamp signal. According to an embodiment, these indications disappear after a predetermined period of time in order to reduce the number of disturbing impressions upon the driver.

The device preferably comprises an activation unit so the driver can switch off and on the automatic load transfer according to the invention.

Figure 2 depicts schematically the device in a vehicle 1 as seen from below. The vehicle is here depicted with a forward axle 3 with a pair of wheels 2, and a bogie which comprises two wheel axles 5, 7 and their respective pairs of wheels 4, 6. According to the invention, at least one of the bogie's wheel axles 5, 7 is powered. The bogie's other wheel axle or wheel axles 5, 7 may be further driven axles and/or tag axles. In the text below, the bogie's wheel axle on which the driven axle pressure is increased/decreased in response to the load distribution signal is referred to as the "powered axle". It is possible, however, that the bogie may comprise more than one powered axle. The vehicle 1 further comprises a control unit adapted to regulating the load distribution between said wheel axles 5, 7. The load distribution may be regulated by using one or more means 8, 9 associated with the bogie's wheel axles to increase/reduce the pressure on wheel axles in order to achieve a certain load distribution between the wheel axles. It is thus possible to achieve a load transfer between the wheel axles such that a desired pressure on a driven axle 5, 7 of the bogie is reached.

Load transfers between the wheel axles are limited according to an embodiment in that a driven axle is at most allowed to be subject to a certain driven axle pressure Pₘₐₓ which is determined inter alia by law on different markets.

According to an embodiment, the maximum driven axle pressure is variable by an air suspension system of the vehicle and its setting can be altered at a workshop.

To know when it is appropriate to increase/decrease the driven axle pressure, the road parameters which indicate characteristics of the road are measured progressively as the vehicle travels along it. Examples of situations where it is appropriate to increase the driven axle pressure are where the vehicle has to travel uphill or downhill or negotiate a bend and/or travel at low road temperatures. The characteristics of the road may thus for example be its gradient, radius of curvature or temperature. Various embodiments are described below and it should be noted that they may be used individually or in combination. For example, several different road parameters may be measured simultaneously and result jointly or individually in one or more load distribution signals.

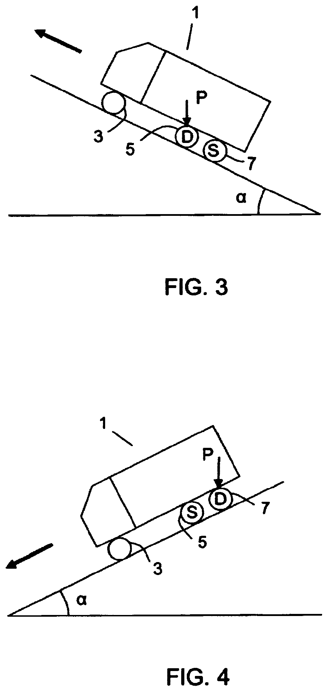

Figure 3 illustrates the vehicle travelling up a hill with a gradient a. According to an embodiment, the road parameter comprises the road's gradient a and said threshold value takes the form of a gradient threshold value K_{α}. The processor unit is then adapted to generating a gradient signal if the road gradient a exceeds K_{α}, in which case the gradient signal will so indicate. The gradient signal may then be converted, according to an embodiment, to a load distribution signal for the driven axle pressure to be increased on one of the bogie's wheel axles. The load distribution signal is sent to the control unit which thereupon, according to an embodiment, increases the driven axle pressure up to the maximum permissible pressure Pₘₐₓ. According to another embodiment, the load distribution signal activates in the control unit a certain mode whereby the driven axle pressure is thereupon regulated. In Figure 3, the bogie's forward wheel axle 5 is the powered axle, marked "D". The driven axle pressure is represented by an arrow and "P". The bogie's other axle 7 in the diagram is a tag axle marked "S".

Figure 4 illustrates a vehicle travelling down a hill with a gradient a. In the diagram, the bogie's rear wheel axle 7 is the powered axle, marked "D". The driven axle pressure is represented by an arrow and "P". Increased driven axle pressure downhill enhances the vehicle's steerability even at high speeds. For increased driven axle pressure to have some greater effect downhill, the powered axle should preferably be the bogie's rear axle 7, which is further away from the foremost axle.

Where the road gradient is to be measured, the sensor unit preferably comprises a sensor for the purpose, e.g. an inclinometer.

According to another embodiment, the processor unit is adapted to measuring the time t from when the road gradient a exceeds K_{α}, and if such is the case for longer than a predetermined time t_{α} the processor unit is adapted to generating a load distribution signal for the driven axle pressure to be increased on one of the bogie's wheel axles. Thus only when the gradient exceeds K_{α} for a certain time is the driven axle pressure increased. There is thus assurance that no load transfer will take place on short hills.

After the hill has levelled out, there is no longer need for an increase in the driven axle pressure. The processor unit is then preferably adapted to generating a gradient signal if the road gradient a is equal to or less than the threshold value K_{α}, in which case the gradient signal will so indicate. The gradient signal may then be sent to the control unit as a load distribution signal for the driven axle pressure to be returned to an initial state.

Reversal to an initial state results in a decrease in the pressure on the bogie's driven axle which was previously subject to increased pressure. According to an embodiment, the load distribution between the bogie's wheel axles is returned to a normal state. A normal state for a bogie with two axles comprising a driven axle and a tag axle may for example mean a 60:40 load distribution between them. This means the driven axle being subject to about 60%, and the tag axle about 40%, of the total pressure on the bogie. Another example of normal state might be a 50:50 load distribution between the bogie's driven axle and tag axle.

The load distribution between the wheel axles has according to an embodiment a dynamic relation to the road gradient. For example, the driven axle pressure will be maximum if the road has a large gradient, and if the road has a smaller gradient the driven axle pressure may be less than Pₘₐₓ.

According to an embodiment, the processor unit is adapted to measuring the time t from when the road gradient a is equal to or less than the threshold value K_{α}, and if such is the case for longer than a predetermined time t_{α} the processor unit is adapted to generating a load distribution signal for reversal of the driven axle pressure. According to this embodiment, only when the road has for example levelled out for a certain time after a hill is the load distribution in the bogie thus reversed. Altering the bogie's load distribution unnecessarily often is thus avoided. When for example a climb is immediately followed by a downhill run, the increased pressure on the driven axle is preferably maintained if the vehicle is so configured that this results in better controllability of the driven axle pressure. The powered axle is then preferably the bogie's rear axle.

According to another embodiment, the road parameter comprises the road's radius of curvature r, said threshold value takes the form of a threshold value Kᵣ for that radius of curvature and the processor unit is adapted to generating a load distribution signal for the driven axle pressure to be increased on one of the bogie's wheel axles if the radius of curvature r exceeds the threshold value Kᵣ. According to an embodiment, the device comprises map data and GPS so that it can keep track of the vehicle's location relative to the map and thus know when a bend is coming and its radius of curvature r. The driven axle pressure can then be increased before the bend, resulting in the possibility of safer cornering. The vehicle's lateral acceleration may also be used to determine the road's radius of curvature, in which case the sensor unit comprises one or more lateral acceleration sensors.

After the bend, the driven axle pressure has preferably to be returned to an initial state. The processor unit is adapted according to an embodiment to generating a load distribution signal for the driven axle pressure to be returned to an initial state if the radius of curvature r is equal to or less than the threshold value Kᵣ. The signal is sent to the control unit, which reverses the driven axle pressure. It is also possible here to use GPS and map data to know when the bend ends and hence to reverse the driven axle pressure. GPS and map data can also be used to determine the road's topography and hence its gradient.

According to another embodiment, the road parameter comprises the road's temperature T, said threshold value takes the form of a temperature threshold value K_{T} and the processor unit is adapted to generating a load distribution signal for the driven axle pressure to be increased on one of the bogie's wheel axles when the temperature of the road is below the threshold value K_{T}. An increase in the driven axle pressure can thus be effected already before any risk of the vehicle becoming unstable, e.g. because of slippery road surface at low outdoor temperatures. The processor unit is preferably also adapted to generating a load distribution signal for the driven axle pressure to be returned to an initial state if the road temperature T is equal to or exceeds the threshold value K_{T}. The driven axle pressure is thus reversed when there is no risk of the vehicle becoming unstable because of the state of the road in cold weather.

According to an embodiment, load transfer with increased driven axle pressure is only possible if the vehicle's speed does not exceed a predetermined level, e.g. 60 km/h. This makes it possible to reduce the risk that the driver might not be able to manage the vehicle because of its altered dynamics at high speeds.

There is also load transfer when the load distribution is regulated so that the driven axle is overloaded by up to 30% of the maximum permissible driven axle pressure Pₘₐₓ for the vehicle. Prevailing laws may then sometimes only allow the vehicle to be driven at up to a certain maximum speed, e.g. 30 km/h. According to an embodiment, when the driven axle pressure has already been increased because of the value of one or more road parameters but is equal to or below Pₘₐₓ, and the vehicle's speed does not exceed a predetermined threshold value, e.g. 30 km/h, the device is adapted to generating a further load distribution signal for the driven axle pressure to be further increased. For example, the driven axle might then be overloaded by up to 30% more than maximum permissible driven axle pressure Pₘₐₓ. This is advantageous when the vehicle loses speed, e.g. uphill, despite a load transfer having already taken place. A further load transfer may then be effected so that the vehicle can gain still more grip on the road and thus hopefully avoid losing more speed.

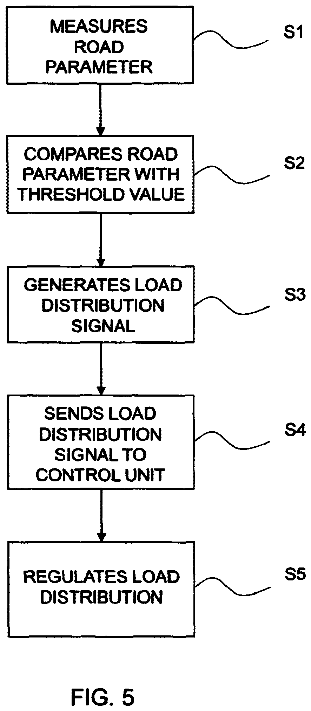

The invention comprises also a method for regulating the load distribution between wheel axles in a vehicle's bogie in which at least one wheel axle is powered. The method is illustrated in a flowchart in Figure 5 and comprises the steps of S1) measuring a road parameter which indicates a characteristic of the road, and generating a road parameter signal based thereon, S2) comparing the road parameter with a predetermined threshold value K_{α}, Kᵣ, K_{T} within the category of the road parameter, S3) generating a load distribution signal which indicates the result of that comparison and S4) sending that signal to a control unit which controls the load distribution between the bogie's wheel axles, whereupon the load distribution between them is regulated as a step S5) based on the load distribution signal.

According to an embodiment, the method comprises as road parameter the road's gradient α, said threshold value takes the form of a gradient threshold value K_{α}, and if the gradient exceeds K_{α} a gradient signal so indicating is generated. The gradient signal may then be sent to the control unit as a load distribution signal for the driven axle pressure to be increased on one of the bogie's wheel axles. According to another embodiment, the method comprises measuring the time t from when the road gradient a exceeds the threshold value K_{α}, and if such is the case for longer than a predetermined time t_{α} a load distribution signal is generated for the driven axle pressure to be increased on one of the bogie's wheel axles. This makes it possible for the driven axle pressure to be increased on hills with or without a time aspect.

According to another embodiment, the method, if the road gradient a is equal to or less than the threshold value K_{α}, comprises generating a gradient signal which so indicates. The gradient signal may then be sent to the control unit as a load distribution signal for reversal of the driven axle pressure. According to a further embodiment, the method comprises measuring the time t from when the gradient a is equal to or less than the threshold value K_{α}, and if such is the case for longer than a predetermined time t_{α} a load distribution signal is generated for reversal of the driven axle pressure. This makes it possible for the driven axle pressure to be reversed with or without a time aspect after a vehicle reversing operation.

According to a further embodiment, the method comprises as road parameter the road's radius of curvature r, said threshold value takes the form of a threshold value Kᵣ for the radius of curvature, and if the radius of curvature r exceeds the threshold value Kᵣ a load distribution signal is generated for the driven axle pressure to be increased on one of the bogie's wheel axles. To make it possible for the driven axle pressure to be returned to an initial state after the bend, the method, if the radius of curvature r is equal to or less than the threshold value Kᵣ, comprises generating a load distribution signal for the driven axle pressure to be returned to an initial state. This makes it possible to increase the driven axle pressure when cornering.

According to yet another embodiment, the method comprises as road parameter the road's temperature T, said threshold value takes the form of a temperature threshold value K_{T}, and if the temperature of the road is below K_{T} a load distribution signal is generated for the driven axle pressure to be increased on one of the bogie's wheel axles. According to another embodiment, the method, if the road temperature T exceeds or is equal to K_{T}, comprises generating a load distribution signal for the driven axle pressure to be returned to an initial state. This makes it possible for the driven axle pressure to be increased in cold weather.

The invention relates also to a computer programme product comprising computer programme instructions to enable a computer system in a vehicle to perform steps according to said method when those instructions are run on said computer system. The invention comprises also a computer programme product in which the computer programme instructions are stored on a medium which can be read by a computer system.

The present invention is not confined to the embodiments described above. Sundry alternatives, modifications and equivalents may be used. The aforesaid embodiments therefore do not limit the invention's scope which is defined by the attached claims.

## Claims

1. A device adapted to regulate the load distribution between the wheel axles in a vehicle's bogie comprising two or more axles with pairs of wheels in which at least one wheel axle is powered, which vehicle further comprises a control unit adapted to regulating the load distribution between said wheel axles,
**characterised in that** the device comprises
- at least one sensor unit adapted to, progressively as the vehicle travels along the road, measuring a road parameter which indicates a characteristic of the road, and to generating a road parameter signal based thereon;
- a processor unit adapted to
comparing said road parameter with a predetermined threshold value (K_{α}, Kᵣ, K_{T}) within the category of the road parameter, and
- generating a load distribution signal adapted to regulate the load distribution between the wheel axles in the bogie based on the result of that comparison;
and that the device is further adapted to sending the load distribution signal to said control unit which thereupon regulates the load distribution between the wheel axles in the bogie on the basis of the load distribution signal.

2. A device according to claim 1, whereby the road parameter comprises the road's gradient α, said threshold value takes the form of a gradient threshold value K_{α}, and the processor unit is adapted to generating a gradient signal if the gradient a exceeds K_{α}, in which case the gradient signal so indicates.

3. A device according to claim 2, whereby the processor unit is adapted to generating on the basis of said gradient signal a load distribution signal for the driven axle pressure to be increased on one of the bogie's wheel axles.

4. A device according to claim 2, whereby the processor unit is adapted to measuring the time t from when the road gradient a exceeds K_{α}, and if such is the case for longer than a predetermined time t_{α} the processor unit is adapted to generating a load distribution signal for the driven axle pressure to be increased on one of the bogie's wheel axles.

5. A device according to claim 2, whereby the processor unit is adapted to generating a gradient signal if the road gradient a is equal to or below the threshold value K_{α}, in which case the gradient signal so indicates.

6. A device according to claim 5, whereby the processor unit is adapted to generating on the basis of said gradient signal a load distribution signal for the driven axle pressure to be returned to an initial state.

7. A device according to claim 6, whereby the processor unit is adapted to measuring the time t from when the road gradient a is equal to or below the threshold value K_{α}, and if such is the case for longer than a predetermined time t_{α} the processor unit is adapted to generating a load distribution signal for return of the driven axle pressure to an initial state.

8. A device according to any one of the above claims, whereby the road parameter comprises the road's radius of curvature r, said threshold value takes the form of a threshold value Kᵣ for the radius of curvature and the processor unit is adapted to generating a load distribution signal for the driven axle pressure to be increased on one of the bogie's wheel axles if the radius of curvature r exceeds the threshold value Kᵣ.

9. A device according to claim 8, whereby the processor unit is adapted to generating a load distribution signal for the driven axle pressure to be returned to an initial state if the road's radius of curvature r is equal to or below the threshold value Kᵣ.

10. A device according to any one of the above claims, whereby the road parameter comprises the road's temperature T, said threshold value takes the form of a temperature threshold value K_{T} and the processor unit is adapted to generating a load distribution signal for the driven axle pressure to be increased on one of the bogie's wheel axles if the temperature of the road is below the threshold value K_{T}.

11. A device according to claim 10, whereby the processor unit is adapted to generating a load distribution signal for the driven axle pressure to be returned to an initial state if the road temperature T exceeds or is equal to the threshold value K_{T}.

12. A method for regulating the load distribution between the wheel axles in a vehicle's bogie comprising two or more axles with pairs of wheels, in which at least one wheel axle is powered, which vehicle further comprises a control unit for regulating the load distribution between said wheel axles,
**characterised in that** the method comprises
- measuring a road parameter, progressively as the vehicle travels along the road, which indicates a characteristic of the road, and generating a road parameter signal based thereon;
- comparing said road parameter with a predetermined threshold value (K_{α}, Kᵣ, K_{T}) within the category of the road parameter;
- generating a load distribution signal adapted to regulate the load distribution signal between the wheel axles in the bogie based on the result of that comparison; and
- sending that signal to said control unit which thereupon regulates the load distribution between the wheel axles of the bogie on the basis of the load distribution signal.

13. A method according to claim 12, in which the road parameter comprises the road's gradient a , said threshold value takes the form of a gradient threshold value K_{α}, and if the gradient a exceeds K_{α} a gradient signal which so indicates is generated.

14. A method according to claim 13, which comprises said gradient signal being sent to the control unit as a load distribution signal for the driven axle pressure to be increased on one of the bogie's wheel axles.

15. A method according to claim 13, which comprises measuring the time t from when the road gradient a exceeds K_{α}, and if such is the case for longer than a predetermined time t_{α} a load distribution signal for the driven axle pressure to be increased on one of the bogie's wheel axles is generated.

16. A method according to claim 13 which, if the road gradient a is equal to or below the threshold value K_{α}, comprises generating a gradient signal which so indicates.

17. A method according to claim 16, which comprises said gradient signal being sent to the control unit as a load distribution signal for reversal of the driven axle pressure.

18. A method according to claim 17, which comprises measuring the time t from when the road gradient a is equal to or below the threshold value K_{α}, and if such is the case for longer than a predetermined time t_{α} a load distribution signal for reversal of the driven axle pressure is generated.

19. A method according to any one of claims 12 to 18, which comprises as road parameter the road's radius of curvature r, said threshold value taking the form of a threshold value Kᵣ for the radius of curvature, and a load distribution signal for the driven axle pressure to be increased on one of the bogie's wheel axles being generated if the radius of curvature r exceeds the threshold value Kᵣ.

20. A method according to claim 19, which comprises a load distribution signal for the driven axle pressure to be returned to an initial state being generated if the road's radius of curvature r is equal to or below the threshold value Kᵣ.

21. A method according to any one of claims 12 to 20, which comprises as road parameter the road's temperature T, said threshold value taking the form of a temperature threshold value K_{T} and a load distribution signal for the driven axle pressure to be increased on one of the bogie's wheel axles being generated if the temperature of the road is below the threshold value K_{T}.

22. A method according to claim 21, which comprises a load distribution signal for the driven axle pressure to be returned to an initial state being generated if the road temperature T exceeds or is equal to the threshold value K_{T}.

23. A computer programme product comprising computer programme instructions to enable a computer system in a vehicle to perform steps according to the method according to any of claims 12 to 22 when those instructions are run on said computer system.

24. A computer programme product according to claim 23, in which the computer programme instructions are stored on a medium which can be read by a computer system.

## Patentansprüche

1. Einrichtung, die zum Regeln der Lastverteilung zwischen den Radachsen des Fahrwerks eines Fahrzeugs mit zwei oder mehr Achsen mit Radpaaren eingerichtet ist, wobei mindestens eine Radachse angetrieben ist, wobei das Fahrzeug ferner eine Steuerungseinheit aufweist, die zum Regeln der Lastverteilung zwischen den Radachsen eingerichtet ist,
**dadurch gekennzeichnet, dass** die Einrichtung aufweist
- mindestens eine Sensoreinheit, die während der Fahrt des Fahrzeugs entlang der Straße zum progressiven Messen eines Straßenparameters, der einen Kennwert der Straße angibt, und zum Erzeugen eines darauf basierenden Parametersignals eingerichtet ist;
- eine Prozessoreinheit, die dazu eingerichtet ist,
den Straßenparameter mit einem vorgegebenen Schwellenwert (K_{α}, Kr, KT) aus der Kategorie der Straßenparameter zu vergleichen, und
- ein Lastverteilungssignal zu erzeugen, das dazu eingerichtet ist, die Lastverteilung zwischen den Radachsen des Fahrwerks auf Basis des Ergebnisses dieses Vergleichs zu regeln;
und dass die Einrichtung ferner dazu eingerichtet ist, das Lastverteilungssignal an die Steuerungseinheit zu senden, die daraufhin die Lastverteilung zwischen den Radachsen des Fahrwerks auf Basis des Lastverteilungssignals einstellt.

2. Einrichtung nach Anspruch 1, wobei der Straßenparameter den Straßengradienten α aufweist, der Schwellenwert die Form eines Gradienten-Schwellenwertes K_{α} annimmt und die Prozessoreinheit dazu eingerichtet ist, ein Gradientensignal zu erzeugen, wenn der Straßengradient α den Wert K_{α} überschreitet, wobei das Gradientensignal dies in einem solchen Fall angibt.

3. Einrichtung nach Anspruch 2, wobei die Prozessoreinheit dazu eingerichtet ist, auf Basis des Gradientensignals ein Lastverteilungssignal zu erzeugen, um den Druck auf die angetriebene Achse einer der Radachsen des Fahrwerks zu erhöhen.

4. Einrichtung nach Anspruch 2, wobei die Prozessoreinheit dazu eingerichtet ist, die Zeit t zu messen, ab der der Straßengradient α den Wert K_{α} überschreitet, und wenn dies länger als eine vorgegebene Zeit t_{α} der Fall ist, die Prozessoreinheit dazu eingerichtet ist, ein Lastverteilungssignal zu erzeugen, um den Druck auf die angetriebene Achse einer der Radachsen des Fahrwerks zu erhöhen.

5. Einrichtung nach Anspruch 2, wobei die Prozessoreinheit dazu eingerichtet ist, ein Gradientensignal zu erzeugen, wenn der Straßengradient α gleich oder kleiner ist als der Schwellenwert K_{α}, wobei das Gradientensignal dies in einem solchen Fall so angibt.

6. Einrichtung nach Anspruch 5, wobei die Prozessoreinheit dazu eingerichtet ist, auf Basis des Gradientensignals ein Lastverteilungssignal zu erzeugen, um den Druck auf die angetriebene Achse in den Ausgangszustand zurückzubringen.

7. Einrichtung nach Anspruch 6, wobei die Prozessoreinheit dazu eingerichtet ist, die Zeit t ab dem Moment zu messen, in dem der Straßengradient α gleich oder kleiner ist als der Schwellenwert K_{α}, und wenn dies länger der Fall ist als eine vorgegebene Zeit t_{α}, die Prozessoreinheit dazu eingerichtet ist, ein Lastverteilungssignal zu erzeugen, um den Druck auf die angetriebene Achse in den Ausgangszustand zurückzubringen.

8. Einrichtung nach einem der obigen Ansprüche, wobei der Straßenparameter den Kurvenradius r der Straße aufweist, der Schwellenwert die Form eines Schwellenwertes Kᵣ für den Kurvenradius annimmt und die Prozessoreinheit dazu eingerichtet ist, ein Lastverteilungssignal zu erzeugen, um den Druck auf die angetriebene Achse einer der Radachsen des Fahrwerks zu erhöhen, wenn der Kurvenradius r den Schwellenwertes Kᵣ überschreitet.

9. Einrichtung nach Anspruch 8, wobei die Prozessoreinheit dazu eingerichtet ist, ein Lastverteilungssignal zu erzeugen, um den Druck auf die angetriebene Achse in den Ausgangszustand zurückzubringen, wenn der Kurvenradius r der Straße gleich oder kleiner ist als der Schwellenwert Kᵣ.

10. Einrichtung nach einem der obigen Ansprüche, wobei der Straßenparameter die Temperatur T der Straße aufweist, der Schwellenwert die Form eines Schwellenwertes der Temperator K_{T} annimmt und die Prozessoreinheit dazu eingerichtet ist, ein Lastverteilungssignal zu erzeugen, um den Druck auf eine der Radachsen des Fahrwerks zu erhöhen, wenn die Straßentemperatur den Schwellenwert K_{T} unterschreitet.

11. Einrichtung nach Anspruch 10, wobei die Prozessoreinheit dazu eingerichtet ist, ein Lastverteilungssignal zu erzeugen, um den Druck auf die angetriebene Achse in den Ausgangszustand zurückzubringen, wenn die Temperatur T der Straße den Schwellenwert K_{T} überschreitet oder gleich diesem ist.

12. Verfahren zum Regeln der Lastverteilung zwischen den Radachsen eines Fahrwerks eines Fahrzeugs, das zwei oder mehr Achsen mit Radpaaren aufweist, wobei mindestens eine Radachse angetrieben ist, wobei das Fahrzeug ferner eine Steuerungseinheit zum Regeln der Lastverteilung zwischen den Radachsen aufweist, **dadurch gekennzeichnet, dass** das Verfahren aufweist
- progressives Messen eines Straßenparameters während der Fahrt des Fahrzeugs entlang der Straße, der einen Kennwert der Straße angibt, und Erzeugen eines darauf basierenden Parametersignals;
- Vergleichen des Straßenparameters mit einem vorgegebenen Schwellenwert (K_{α}, Kᵣ, K_{T}) aus der Kategorie der Straßenparameter;
- Erzeugen eines Lastverteilungssignals, das dazu eingerichtet ist, die Lastverteilung zwischen den Radachsen des Fahrwerks auf Basis des Ergebnisses dieses Vergleichs zu regeln; und
- Senden des Signals an die Steuerungseinheit, die daraufhin die Lastverteilung zwischen den Radachsen des Fahrwerks auf Basis des Lastverteilungssignals regelt.

13. Verfahren nach Anspruch 12, wobei der Straßenparameter den Straßengradienten α aufweist, der Schwellenwert die Form eines Gradienten-Schwellenwertes Kα annimmt und ein Gradientensignal erzeugt wird, wenn der Gradient α Kα überschreitet, wobei dies angegeben wird.

14. Verfahren nach Anspruch 13, das das Senden des Gradientensignals an die Steuerungseinheit als ein Lastverteilungssignal aufweist, um den Druck auf die angetriebene Achse einer der Radachsen des Fahrwerks zu erhöhen.

15. Verfahren nach Anspruch 13, das die Messung der Zeit t aufweist, ab der der Straßengradient α den Wert K_{α} überschreitet, und wenn dies länger als eine vorgegebene Zeit t_{α} der Fall ist, die Erzeugung eines Lastverteilungssignals, um den Druck auf die angetriebene Achse einer der Radachsen des Fahrwerks zu erhöhen.

16. Verfahren nach Anspruch 13, das dann, wenn der Straßengradient α gleich oder kleiner ist als der Schwellenwert K_{α}, die Erzeugung eines Gradientensignals aufweist, das dies angibt.

17. Verfahren nach Anspruch 16, das das Senden des Gradientensignals als ein Lastverteilungssignal zur Steuerungseinheit aufweist, um den Druck auf die angetriebene Achse wieder in den Ausgangszustand zu bringen.

18. Verfahren nach Anspruch 17, das die Messung der Zeit t aufweist, ab der der Straßengradient α gleich oder kleiner ist als der Schwellenwert K_{α}, und wenn dies länger als eine vorgegebene Zeit t_{α} der Fall ist, die Erzeugung eines Lastverteilungssignals, um den Druck uf die angetriebenn Achse wieder in den Ausgangszustand zu bringen.

19. Verfahren nach einem der Ansprüche 12 bis 18, wobei der Straßenparameter den Kurvenradius r der Straße aufweist, der Schwellenwert die Form eines Schwellenwertes Kᵣ für den Kurvenradius annimmt und ein Lastverteilungssignal erzeugt wird, um den Druck auf die angetriebene Achse einer der Radachsen des Fahrwerks zu erhöhen, wenn der Kurvenradius r den Schwellenwertes Kᵣ überschreitet.

20. Verfahren nach Anspruch 19, das die Erzeugung eines Lastverteilungssignals aufweist, um den Druck der angetriebenen Achse in den Ausgangszustand zurückzubringen, wenn der Kurvenradius r der Straße gleich oder kleiner ist als der Schwellenwert Kᵣ.

21. Verfahren nach einem der Ansprüche 12 bis 20, das als Straßenparameter die Temperatur T der Straße aufweist, wobei der Schwellenwert die Form eines Schwellenwertes der Temperator K_{T} annimmt, und die Erzeugung eines Lastverteilungssignals, um den Druck auf eine der Radachsen des Fahrwerks zu erhöhen, wenn die Straßentemperatur den Schwellenwert K_{T} unterschreitet.

22. Verfahren nach Anspruch 21, das die Erzeugung eines Lastverteilungssignals aufweist, um den Druck auf die angetriebene Achse in den Ausgangszustand zurückzubringen, wenn die Temperatur T der Straße den Schwellenwert K_{T} überschreitet oder gleich diesem ist.

23. Computerprogramm, das Computerprogrammanweisungen aufweist, die es einem Computersystem in einem Fahrzeug ermöglichen, Schritte gemäß dem Verfahren nach einem der Ansprüche 12 bis 22 auszuführen, wenn diese Anweisungen auf dem Computersystem ablaufen.

24. Computerprogrammprodukt nach Anspruch 23, in dem die Computerprogrammanweisungen auf einem Medium gespeichert sind, das von einem Computersystem gelesen werden kann.

## Revendications

1. Dispositif adapté pour réguler la distribution de charge entre les axes de roues dans un bogie de véhicule comprenant deux ou plusieurs axes avec des paires de roues dans lequel au moins un axe de roue est motorisé, lequel véhicule comprend en outre une unité de commande adaptée pour réguler la distribution de charge entre lesdits axes de roues, **caractérisé en ce que** le dispositif comprend
- au moins une unité de capteur adaptée pour mesurer un paramètre routier qui indique une caractéristique de la route, de manière progressive lorsque le véhicule se déplace sur la route, et pour générer un signal de paramètre routier sur la base de celui-ci ;
- une unité de processeur adaptée pour
comparer ledit paramètre routier avec une valeur de seuil prédéterminée (K_{α}, Kᵣ, K_{T}) dans la catégorie du paramètre routier, et
- générer un signal de distribution de charge adapté pour réguler la distribution de charge entre les axes de roues dans le bogie sur la base du résultat de cette comparaison ;
et **en ce que** le dispositif est en outre adapté pour envoyer le signal de distribution de charge vers ladite unité de commande qui ensuite régule la distribution de charge entre les axes de roues dans le bogie sur la base du signal de distribution de charge.

2. Dispositif selon la revendication 1, par lequel le paramètre routier comprend le gradient de la route α, ladite valeur de seuil prend la forme d'une valeur de seuil de gradient K_{α}, et l'unité de processeur est adaptée pour générer un signal de gradient si le gradient α dépasse K_{α}, dans quel cas le signal de gradient l'indique ainsi.

3. Dispositif selon la revendication 2, par lequel l'unité de processeur est adaptée pour générer sur la base dudit signal de gradient un signal de distribution de charge pour que la pression de l'axe entraîné soit augmentée sur l'un des axes de roues du bogie.

4. Dispositif selon la revendication 2, par lequel l'unité de processeur est adaptée pour mesurer le temps t à partir duquel le gradient de route α dépasse K_{α}, et si c'est le cas pour plus longtemps qu'une durée prédéterminée t_{α} l'unité de processeur est adaptée pour générer un signal de distribution de charge pour que la pression de l'axe entraîné soit augmentée sur l'un des axes de roues du bogie.

5. Dispositif selon la revendication 2, par lequel l'unité de processeur est adaptée pour générer un signal de gradient si le gradient de route α est égal ou inférieur à la valeur de seuil K_{α}, dans quel cas le signal de gradient l'indique ainsi.

6. Dispositif selon la revendication 5, par lequel l'unité de processeur est adaptée pour générer sur la base dudit signal de gradient un signal de distribution de charge pour que la pression d'axe entraîné retourne à un état initial.

7. Dispositif selon la revendication 6, par lequel l'unité de processeur est adaptée pour mesurer le temps t à partir duquel le gradient de route α est égal ou inférieur à la valeur de seuil K_{α}, et si c'est le cas depuis plus longtemps qu'une durée prédéterminée t_{α} l'unité de processeur est adaptée pour générer un signal de distribution de charge pour un retour de la pression d'axe entraîné à un état initial.

8. Dispositif selon l'une quelconque des revendications ci-dessus, par lequel le paramètre routier comprend le rayon de courbure de la route r, ladite valeur de seuil prend la forme d'une valeur de seuil Kᵣ pour le rayon de courbure et l'unité de processeur est adaptée pour générer un signal de distribution de charge pour que la pression d'axe entraîné augmente sur des axes de roues du bogie si le rayon de courbure r dépasse la valeur de seuil Kᵣ.

9. Dispositif selon la revendication 8, par lequel l'unité de processeur est adaptée pour générer un signal de distribution de charge pour que la pression d'axe entraîné retourne vers un état initial si le rayon de courbure de la route r est égal ou inférieur à la valeur de seuil Kᵣ.

10. Dispositif selon l'une quelconque des revendications ci-dessus, par lequel le paramètre routier comprend la température de la route T, ladite valeur de seuil prend la forme d'une valeur de seuil de température K_{T} et l'unité de processeur est adaptée pour générer un signal de distribution de charge pour que la pression d'axe entraîné soit augmentée sur l'un des axes de roues du bogie si la température de la route est inférieure à la valeur de seuil K_{T}.

11. Dispositif selon la revendication 10, par lequel l'unité de processeur est adaptée pour générer un signal de distribution de charge pour que la pression d'axe entraîné retourne à un état initial si la température de la route T excède ou est égale à la valeur de seuil K_{T}.

12. Procédé de régulation de la distribution de charge entre les axes de roue dans un bogie de véhicule comprenant deux ou plusieurs axes avec des paires de roues, dans lequel au moins un axe de roue est motorisé, lequel véhicule comprend en outre une unité de commande pour la régulation de la distribution de charge entre lesdits axes de roues, **caractérisé en ce que** le procédé comprend
- la mesure d'un paramètre routier, de manière progressive lorsque le véhicule se déplace le long de la route, qui indique une caractéristique de la route, et la génération d'un signal de paramètre routier basé sur celui-ci ;
- la comparaison dudit paramètre routier avec une valeur de seuil prédéterminée (K_{α}, Kᵣ, K_{T}) dans la catégorie du paramètre routier ;
- la génération d'un signal de distribution de charge adapté pour réguler le signal de distribution de charge entre les axes de roues dans le bogie sur la base du résultat de cette comparaison ; et
- l'envoi de ce signal à ladite unité de commande qui ensuite régule la distribution de charge entre les axes de roues du bogie sur la base du signal de distribution de charge.

13. Procédé selon la revendication 12, dans lequel le paramètre routier comprend le gradient de la route α, ladite valeur de seuil prend la forme d'une valeur de seuil de gradient K_{α}, et si le gradient α excède K_{α} un signal de gradient qui l'indique ainsi est généré.

14. Procédé selon la revendication 13, qui comprend ledit signal de gradient qui est envoyé à l'unité de commande en tant que signal de distribution de charge pour que la pression d'axe entraîné soit augmentée dans l'un des axes de roues du bogie.

15. Procédé selon la revendication 13, qui comprend la mesure du temps t à partir duquel le gradient de route a excède K_{α}, et si tel est le cas depuis plus longtemps qu'un temps prédéterminé t_{α} un signal de distribution de charge pour que la pression d'axe entraîné soit augmentée dans un des axes de roues du bogie est généré.

16. Procédé selon la revendication 13 qui, si le gradient de route α est égal ou inférieur à la valeur de seuil K_{α}, comprend la génération d'un signal de gradient qui indique ce fait.

17. Procédé selon la revendication 16, qui comprend ledit signal de gradient qui est envoyé à l'unité de commande en tant que signal de distribution de charge pour une inversion de la pression d'axe entraîné.

18. Procédé selon la revendication 17, qui comprend la mesure du temps t à partir duquel le gradient routier α est égal ou inférieur à la valeur de seuil K_{α}, et si tel est le cas depuis plus longtemps qu'un temps prédéterminé t_{α} un signal de distribution de charge pour une inversion de la pression d'axe entraîné est généré.

19. Procédé selon l'une quelconque des revendications 12 à 18, qui comprend en tant que paramètre routier le rayon de courbure r de la route, ladite valeur de seuil prenant la forme d'une valeur de seuil Kᵣ pour le rayon de courbure, et un signal de distribution de charge pour que la pression d'axe entraîné soit augmentée sur l'un des axes de roues du bogie est généré si le rayon de courbure r excède la valeur de seuil Kᵣ.

20. Procédé selon la revendication 19, qui comprend un signal de distribution de charge pour que la pression d'axe entraîné retourne à un état initial étant généré si le rayon de courbure r de la route est égal ou inférieur à la valeur de seuil Kᵣ.

21. Procédé selon l'une quelconque des revendications 12 à 20, qui comprend en tant que paramètre routier la température T de la route, ladite valeur de seuil prenant la forme d'une valeur de seuil de température K_{T} et un signal de distribution de charge pour que la pression d'axe entraîné soit augmentée sur l'un des axe de roues du bogie est généré si la température de la route est inférieure à la valeur de seuil K_{T}.

22. Procédé selon la revendication 21, qui comprend un signal de distribution de charge pour que la pression d'axe entraîné retourne vers un état initial étant généré si la température de la route T excède ou est égale à la valeur de seuil K_{T}.

23. Produit-programme d'ordinateur comprenant des instructions de programme informatique pour permettre à un système informatique dans un véhicule d'exécuter les étapes d'après le procédé selon l'une quelconque des revendications 12 à 22 lorsque ces instructions sont exécutées sur ledit système informatique.

24. Produit-programme informatique selon la revendication 23, dans lequel les instructions de programme informatique sont stockées sur un support qui peut être lu par un système informatique.
